(19) Europäisches Patentamt
European Patent Office
Office européen des brevets

(11) EP 4 270 627 A1

(12) EUROPEAN PATENT APPLICATION
published in accordance with Art. 153(4) EPC

(43) Date of publication:
**01.11.2023 Bulletin 2023/44**

(21) Application number: **22873245.9**

(22) Date of filing: **27.09.2022**

(51) International Patent Classification (IPC):
***H01M 50/449*** *(2021.01)* ***H01M 50/414*** *(2021.01)*
***H01G 11/52*** *(2013.01)*

(52) Cooperative Patent Classification (CPC):
**H01G 11/52; H01M 50/414; H01M 50/449;**
Y02E 60/10

(86) International application number:
**PCT/KR2022/014448**

(87) International publication number:
**WO 2023/048543 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 KR 20210127572**

(71) Applicant: **LG Energy Solution, Ltd.**
**Seoul 07335 (KR)**

(72) Inventors:
- **SUNG, In-Hyouk**
  **Daejeon 34122 (KR)**
- **KA, Kyung-Ryun**
  **Daejeon 34122 (KR)**
- **LEE, Ji-Su**
  **Daejeon 34122 (KR)**

(74) Representative: **Hoffmann Eitle**
**Patent- und Rechtsanwälte PartmbB**
**Arabellastraße 30**
**81925 München (DE)**

# (54) SEPARATOR FOR ELECTROCHEMICAL DEVICE AND ELECTROCHEMICAL DEVICE COMPRISING SAME

(57) The present disclosure relates to a separator for an electrochemical device having excellent compression resistance and an electrochemical device including the same. The separator for an electrochemical device includes a polymer layer disposed on at least one surface of a porous polymer substrate and containing a binder polymer having a crosslinked structure including a structure represented by the following Chemical Formula 1:

[Chemical Formula 1]

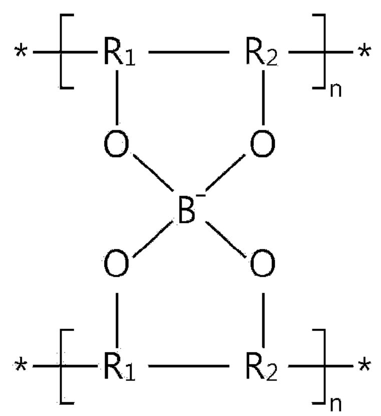

wherein each substituent is the same as defined in the specification.

EP 4 270 627 A1

## Description

### TECHNICAL FIELD

The present disclosure relates to a separator for an electrochemical device and an electrochemical device including the same.

The present application claims priority to Korean Patent Application No. 10-2021-0127572 filed on September 27, 2021 in the Republic of Korea, the disclosures of which are incorporated herein by reference.

### BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries with high energy density used as power sources for such electronic devices. Lithium secondary batteries are those satisfying such a need best. Therefore, active studies have been conducted about such lithium secondary batteries.

Such a lithium secondary battery includes a positive electrode including a positive electrode active material, a negative electrode including a negative electrode active material, a non-aqueous electrolyte including an electrolyte salt and an organic solvent, and a separator interposed between the positive electrode and the negative electrode and electrically insulating both electrodes from each other.

When the separator and electrodes are stacked to manufacture a secondary battery, the separator may be locally compressed due to heat and pressure. In addition, the separator may be locally compressed due to the volumetric swelling generated as charge/discharge cycles proceed. Therefore, the separator may undergo degradation of physical properties, such as withstanding voltage characteristics.

Particularly, silicon has been increasingly in use for a negative electrode recently, instead of graphite, in order to increase the energy density of a secondary battery. However, silicon has high hardness, and thus causes an increase in the problem caused by the compression of a separator.

Under these circumstances, there is an imminent need for a separator having excellent compression resistance.

### DISCLOSURE

#### Technical Problem

The present disclosure is designed to solve the problems of the related art, and therefore the present disclosure is directed to providing a separator for an electrochemical device, having excellent compression resistance, and an electrochemical device including the same.

#### Technical Solution

In one aspect of the present disclosure, there is provided a separator for an electrochemical device according to any one of the following embodiments.

According to the first embodiment of the present disclosure, there is provided a separator for an electrochemical device, including:

a porous polymer substrate; and
a polymer layer disposed on at least one surface of the porous polymer substrate and including a binder polymer having a crosslinked structure,
wherein the binder polymer having a crosslinked structure includes a structure represented by the following Chemical Formula 1:

[Chemical Formula 1]

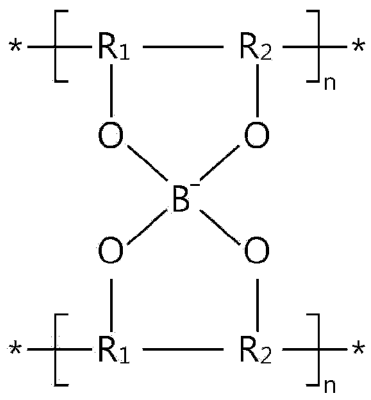

wherein each of $R_1$ and $R_2$ independently represents any one selected from a substituted or non-substituted C1-C10 alkylene group, a substituted or non-substituted C3-C10 cycloalkylene group and a substituted or non-substituted C6-C20 arylene group, and
n is 1-200.

According to the second embodiment of the present disclosure, there is provided the separator for an electrochemical device as defined in the first embodiment, wherein the binder polymer having a crosslinked structure includes a crosslinked product of a boron-containing compound with a hydroxyl group-containing binder polymer.

According to the third embodiment of the present disclosure, there is provided the separator for an electrochemical device as defined in the second embodiment, wherein the boron-containing compound includes borax, boric acid, lithium borate, potassium borate, or two or more of them.

According to the fourth embodiment of the present disclosure, there is provided the separator for an electrochemical device as defined in the second or the third embodiment, wherein the hydroxyl group-containing binder polymer includes poly(vinyl alcohol), poly(ethylene glycol), or two or more of them.

According to the fifth embodiment of the present disclosure, there is provided the separator for an electrochemical device as defined in any one of the second to the fourth embodiments, wherein the weight ratio of the boron-containing compound to the hydroxyl group-containing binder polymer is 30:70-70:30.

According to the sixth embodiment of the present disclosure, there is provided the separator for an electrochemical device as defined in any one of the first to the fifth embodiments, wherein the binder polymer having a crosslinked structure includes a structure represented by the following Chemical Formula 2:

[Chemical Formula 2]

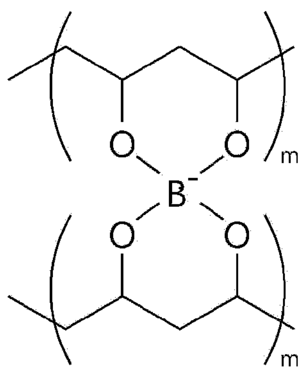

wherein m is 1-200.

According to the seventh embodiment of the present disclosure, there is provided the separator for an electrochemical device as defined in any one of the first to the sixth embodiments, which shows a rate of decrease in thickness of 4% or less.

In another aspect of the present disclosure, there is provided an electrochemical device according to the following embodiment.

According to the eighth embodiment of the present disclosure, there is provided an electrochemical device including a positive electrode, a negative electrode and a separator interposed between the positive electrode and the negative electrode, wherein the separator is the separator for an electrochemical device as defined in any one of the first to the seventh embodiments.

Advantageous Effects

The separator for an electrochemical device according to an embodiment of the present disclosure includes a binder polymer having a crosslinked structure, represented by the above Chemical Formula 1, and thus shows excellent compression resistance.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

In one aspect of the present disclosure, there is provided a separator for an electrochemical device, including:

a porous polymer substrate; and

a polymer layer disposed on at least one surface of the porous polymer substrate and including a binder polymer having a crosslinked structure,

wherein the binder polymer having a crosslinked structure includes a structure represented by the following Chemical Formula 1:

[Chemical Formula 1]

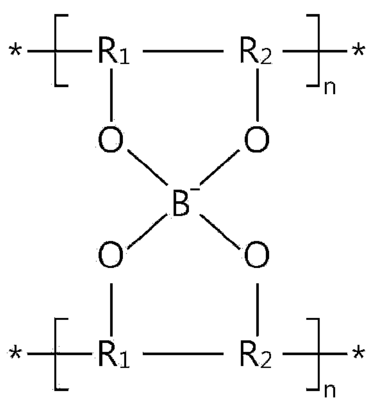

wherein each of $R_1$ and $R_2$ independently represents any one selected from a substituted or non-substituted C1-C10 alkylene group, a substituted or non-substituted C3-C10 cycloalkylene group and a substituted or non-substituted C6-C20 arylene group, and

n is 1-200.

Any material may be used as a porous polymer substrate with no particular limitation, as long as it may be used as a material of a separator for an electrochemical device. The porous polymer substrate may be a thin film including a polymeric material, and non-limiting examples of such a polymeric material include at least one selected from polymer resins, such as polyolefin resin, polyethylene terephthalate, polybutylene terephthalate, polyacetal, polyamide, polycarbonate, polyimide, polyetherether ketone, polyether sulfone, polyphenylene oxide, polyphenylene sulfide, and polyethylene naphthalene. In addition, the porous polymer substrate may include a non-woven web or a porous polymer film made of such a polymeric material, or a laminate of two or more layers thereof. Particularly, the porous polymer substrate may be any one of the following a) to e):

a) A porous film formed by melting and extruding a polymer resin;
b) A multilayer film formed by stacking two or more layers of the porous films of a);
c) A non-woven web formed by integrating filaments obtained by melting/spinning a polymer resin;
d) A multilayer film formed by stacking two or more layers of the non-woven webs of c); and
e) A multilayered porous film including two or more of a) to d).

According to an embodiment of the present disclosure, the porous polymer substrate may have a thickness of 5-50 μm. The thickness of the porous polymer substrate is not limited to the above-defined range. However, when the thickness satisfies the above-defined range, it is possible to ensure energy density, while preventing the separator from being damaged during the use of a battery.

Meanwhile, according to an embodiment of the present disclosure, although there is no particular limitation in the pore size and porosity of the porous polymer substrate, the pore size may be 0.01-50 μm, and the porosity may be 10-95%.

According to the present disclosure, the porosity and pore size of the porous polymer substrate may be determined from scanning electron microscopic (SEM) images, by using a mercury porosimeter or a capillary flow porosimeter, or through the BET6-point method based on nitrogen gas adsorption flow using a porosimetry analyzer (e.g. Belsorp-II mini, Bell Japan Inc.). Herein, it is preferred to use a capillary flow porosimeter.

The polymer layer is disposed on at least one surface of the porous polymer substrate. For example, the polymer layer may be disposed on one surface or both surfaces of the porous polymer substrate. The polymer layer includes a binder polymer having a crosslinked structure, represented by the above Chemical Formula 1.

When a separator and electrodes are laminated to provide an electrochemical device in which the separator and electrodes are stacked, the separator may be locally compressed due to the heat and pressure applied during the lamination process. For example, the separator may be locally compressed due to the heat and pressure applied when the separator and electrodes are laminated under the condition of about 7.8 MPa and 70°C for 10 seconds. In addition, the separator may be locally compressed due to the volumetric swelling generated as charge/discharge cycles proceed.

When the separator for an electrochemical device shows a rate of decrease in thickness of 10% or more, the pores of the separator are decreased to cause degradation of output and life characteristics, and/or it is more likely that the electrodes generate a shortcircuit.

The separator for an electrochemical device according to an embodiment of the present disclosure includes the binder polymer having a crosslinked structure and showing excellent elasticity, and thus may provide improved compression resistance.

For example, the separator for an electrochemical device may show a rate of decrease in thickness of 4% or less. Particularly, the separator for an electrochemical device may show a rate of decrease in thickness of 4% or less under the lamination temperature and pressure condition. For example, the lamination temperature and pressure condition may include carrying out lamination under 7.8 MPa at 70°C for 10 seconds. When the separator for an electrochemical device shows the above-defined range of rate of decrease in thickness, it is possible to minimize damages on the separator and to facilitate improvement of the performance of an electrochemical device.

The rate of decrease in thickness of the separator for an electrochemical device may be calculated by measuring the thickness of the separator after the separator is compressed under 7.8 MPa at 70°C for 10 seconds.

The rate of decrease in thickness of the separator for an electrochemical device may be calculated according to the following formula:

$$\text{Rate of decrease in thickness of separator} = (\text{Initial thickness of separator} - \text{Thickness of separator after compression}) / (\text{Initial thickness of separator})$$

As used herein, the term ‘substituted or non-substituted C1-C10 alkylene group’ means a substituted or non-substituted linear or branched divalent hydrocarbon moiety having 1-10 carbon atoms, and the alkylene group may be a substituted or non-substituted C1-C6 alkylene group, or a substituted or non-substituted C1-C3 alkylene group. For example, at least one hydrogen atom contained in the alkylene group may be substituted with a halogen atom, a hydroxyl group, -SH, a nitro group,

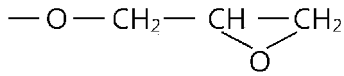
,

a cyano group, a substituted or non-substituted amino group (-$NH_2$, -NH(R'), -N(R"R"')), wherein each of R', R" and R"' independently represents a C1-C10 alkyl group), an amidino group, hydrazine, a hydrazone group, a carboxyl group, a sulfonate group, a phosphate group, a C1-C20 alkyl group, a C1-C20 halogenated alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, or a C6-C20 heteroarylalkyl group.

The term 'substituted or non-substituted C3-C30 cycloalkylene group' means a substituted or non-substituted divalent monocyclic system having 3-30 carbon atoms, and the cycloalkylene group may be a substituted or non-substituted C3-C15 cycloalkylene group, a substituted or non-substituted C3-C12 cycloalkylene group, or a substituted or non-substituted C3-C6 cycloalkylene group. For example, at least one hydrogen atom contained in the cycloalkylene group may be substituted with a substituent, similarly to the alkylene group.

The term 'substituted or non-substituted C6-C30 arylene group' means a substituted or non-substituent divalent carbocyclic aromatic system having 6-30 carbon atoms and containing one or more rings, as used alone or in combination, and the rings may be attached or fused to each other in a pendent mode. The arylene group may be a substituted or non-substituted C6-C18 arylene group, or a substituted or non-substituted C6-C15 arylene group, and may include a phenyl group, a naphthyl group, a biphenyl group, or the like. For example, at least one hydrogen atom contained in the aryl group may be substituted with a substituent, similarly to the alkylene group.

According to an embodiment of the present disclosure, the binder polymer having a crosslinked structure may be represented by the above Chemical Formula 1. For example, the binder polymer having a crosslinked structure may include only the structure of Chemical Formula 1.

According to an embodiment of the present disclosure, the binder polymer having a crosslinked structure may include a crosslinked product of a boron-containing compound with a hydroxyl group-containing binder polymer. The binder polymer having a crosslinked structure may have a crosslinked structure formed by the reaction of the hydroxyl group of the boron-containing compound with the hydroxyl group of the hydroxyl group-containing binder polymer. For example, the boron-containing compound may be dissolved in an aqueous solvent to form borate ions, and the hydroxyl group of the borate ion form hydrogen bonding with the hydroxyl group of the hydroxyl group-containing binder polymer, and thus the binder polymer may be crosslinked.

According to an embodiment of the present disclosure, the boron-containing compound may include borax, boric acid, lithium borate, potassium borate, or two or more of them. When the boron-containing compound is borax, it is easy to form a binder polymer having a crosslinked structure.

Herein, the borax refers to a compound represented by the chemical formula of $Na_2B_4O_7$. The borax may have a structure represented by the following formula:

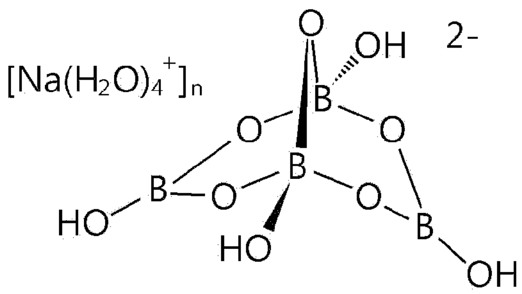

The borax is dissolved in an aqueous solvent to produce hydroxide ions ($OH^-$) and boric acid, and the produced boric acid may react with the aqueous solvent to form borate ions. The hydroxyl group of the borate ion may react with the hydroxyl group of the hydroxyl group-containing binder polymer to form a binder polymer having a crosslinked structure.

According to an embodiment of the present disclosure, the hydroxyl group-containing binder polymer may include a hydroxyl group at the end thereof. When a hydroxyl group is present at the end of the hydroxyl group-containing binder polymer, it is possible to facilitate the reaction of the hydroxyl group of the boron-containing compound with the hydroxyl group of the hydroxyl group-containing binder polymer.

According to an embodiment of the present disclosure, the hydroxyl group-containing binder polymer may be a binder polymer having excellent adhesion or heat resistance.

In addition, according to an embodiment of the present disclosure, the hydroxyl group-containing binder polymer

may be a water-soluble binder polymer.

According to an embodiment of the present disclosure, the hydroxyl group-containing binder polymer may include poly(vinyl alcohol), polyethylene glycol), or two or more of them. Particularly, in the case of poly(vinyl alcohol), it has excellent heat resistance, and thus may be used as a hydroxyl group-containing binder polymer advantageously.

According to an embodiment of the present disclosure, the weight ratio of the boron-containing compound to the hydroxyl group-containing binder polymer may be 30:70-70:30, 40:60-60:40, or 45:55-55:45. When the weight ratio of the boron-containing compound to the hydroxyl group-containing binder polymer satisfies the above-defined range, the separator for an electrochemical device including the binder polymer having a crosslinked structure may provide further improved compression resistance.

According to an embodiment of the present disclosure, the binder polymer having a crosslinked structure may have a crosslinking degree of 10-90%, or 30-70%. When the crosslinking degree of the binder polymer having a crosslinked structure satisfies the above-defined range, the separator for an electrochemical device including the binder polymer having a crosslinked structure may provide further improved compression resistance, and such a range of crosslinking degree may be realized with ease.

The crosslinking degree may be determined by vacuum drying the separator at 60°C for 12 hours, weighing the separator (Wd), dipping the separator in distilled water for 1 hour, and weighing the separator again (Ww), and calculating the crosslinking degree according to the following formula:

$$\text{Crosslinking degree (\%)} = (Ww-Wd)/Wd \times 100$$

According to an embodiment of the present disclosure, the binder polymer having a crosslinked structure may include a structure represented by the following Chemical Formula 2:

[Chemical Formula 2]

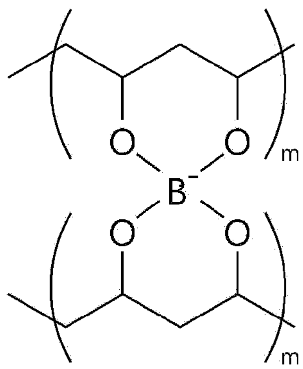

wherein m is 1-200.

For example, the binder polymer having a crosslinked structure and including the structure represented by the above Chemical Formula 2 may include a crosslinked product of the reaction of poly(vinyl alcohol) with borax.

The reaction mechanism of poly(vinyl alcohol) with borax is as follows:

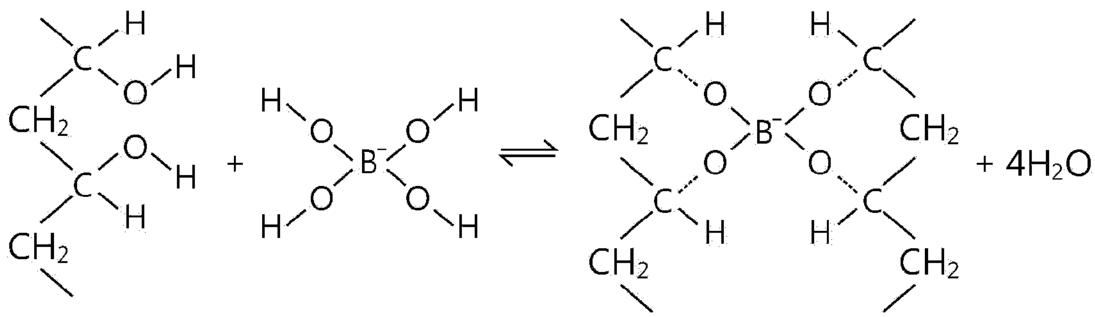

According to an embodiment of the present disclosure, the binder polymer having a crosslinked structure may have the structure represented by the above Chemical Formula 2. The binder polymer having a crosslinked structure

may be formed of the structure represented by the above Chemical Formula 2.

According to an embodiment of the present disclosure, the polymer layer may have a thickness of 1-16 μm, or 4-12 μm. When the thickness of the polymer layer satisfies the above-defined range, it is possible to further improve the compression resistance, while ensuring the processing stability of the separator for an electrochemical device including the polymer layer. In addition, it is possible to further improve the compression resistance of the separator, while preventing degradation of the physical properties, such as resistance and air permeation time.

The separator for an electrochemical device according to an embodiment of the present disclosure may be obtained by the method as described hereinafter, but is not limited thereto.

In another aspect of the present disclosure, there is provided a method for manufacturing separator for an electrochemical device, including the steps of:

coating a first coating solution including a hydroxyl group-containing binder polymer on at least one surface of a porous polymer substrate, followed by drying; and
coating a second coating solution including a boron-containing compound on the top surface of the porous polymer substrate coated with the hydroxyl group-containing binder polymer, followed by drying.

Hereinafter, the method for manufacturing a separator for an electrochemical device according to an embodiment of the present disclosure will be explained with reference to the main part thereof.

First, a first coating solution including a hydroxyl group-containing binder polymer is coated on at least one surface of a porous polymer substrate, followed by drying.

The porous polymer substrate may be obtained from the above-mentioned materials by forming pores therein through a conventional process known to those skilled in the art for ensuring high air permeability and porosity, such as a wet process using a solvent, a diluent or a pore forming agent or a dry process based on orientation.

Reference will be made to the above description with reference to the hydroxyl group-containing binder polymer.

The first coating solution may include the hydroxyl group-containing binder polymer dissolved or dispersed in an aqueous solvent. When the first coating solution includes an aqueous solvent, there is an advantage in terms of eco-friendly characteristics.

According to an embodiment of the present disclosure, the content of the hydroxyl group-containing binder polymer in the first coating solution may be 5-20 wt%, or 5-15 wt%, based on 100 wt% of the first coating solution. When the content of the hydroxyl group-containing binder polymer satisfies the above-defined range, it is possible to facilitate coating with the first coating solution and dissolution of the hydroxyl group-containing binder polymer in the first coating solution.

The method for coating the first coating solution on at least one surface of the porous polymer substrate is not particular limited, and particular examples of the method include dip coating, die coating, roll coating, comma coating, doctor blade coating, reverse roll coating, direct roll coating, or the like.

The drying may be carried out through a method known to those skilled in the art, in a batchwise or continuous processing using an oven or a heating chamber within a temperature range considering the vapor pressure of the solvent used herein.

According to an embodiment of the present disclosure, the drying may be carried out at 40-100°C. When the drying is carried out at the above-defined range of temperature, it is possible to easily prevent generation of a portion where the first coating solution is not dried and deformation of the porous polymer substrate caused by high temperature.

Then, a second coating solution including a boron-containing compound is coated on the top surface of the porous polymer substrate coated with the hydroxyl group-containing binder polymer, followed by drying.

Reference will be made to the above description about the boron-containing compound.

The second coating solution may include the boron-containing compound dissolved in an aqueous solvent. When the second coating solution includes an aqueous solvent, there is an advantage in terms of eco-friendly characteristics.

According to an embodiment of the present disclosure, the content of the boron-containing compound in the second coating solution may be 5-20 wt%, or 5-15 wt%, based on 100 wt% of the second coating solution. When the content of the boron-containing compound satisfies the above-defined range, it is possible to facilitate coating with the second coating solution and dissolution of the boron-containing compound in the second coating solution.

According to an embodiment of the present disclosure, the second coating solution may have pH of 8-10. For example, sodium hydrogen carbonate may be added to the second coating solution to control the pH of the second coating solution to the above-defined range. When the pH of the second coating solution satisfies the above-defined range, the boron-containing compound easily forms borate ions, thereby facilitating the crosslinking of the boron-containing compound with the hydroxyl group-containing binder polymer.

The method for coating the second coating solution on the top surface of the porous polymer substrate coated with the hydroxyl group-containing binder polymer is not particular limited, and particular examples of the method include

dip coating, die coating, roll coating, comma coating, doctor blade coating, reverse roll coating, direct roll coating, or the like.

The drying may be carried out through a method known to those skilled in the art, in a batchwise or continuous processing using an oven or a heating chamber within a temperature range considering the vapor pressure of the solvent used herein.

According to an embodiment of the present disclosure, the drying may be carried out at 40-100°C. When the drying is carried out at the above-defined range of temperature, it is possible to easily prevent generation of a portion where the second coating solution is not dried and deformation of the porous polymer substrate caused by high temperature.

The separator for an electrochemical device may be interposed between a positive electrode and a negative electrode to obtain an electrochemical device.

The electrochemical device according to the present disclosure includes any device which carries out electrochemical reaction, and particular examples thereof include all types of primary batteries, secondary batteries, fuel cells, solar cells or capacitors, such as super capacitor devices.

Particularly, the electrochemical device may be a lithium secondary battery including a lithium metal secondary battery, a lithium-ion secondary battery, a lithium polymer secondary battery, a lithium-ion polymer secondary battery, or the like.

The electrodes used in combination with the separator for an electrochemical device according to the present disclosure are not particularly limited, and may be obtained by allowing an electrode active material layer containing an electrode active material, a conductive material and a binder to be bound to an electrode current collector through a method generally known in the art.

Among the electrode active materials, non-limiting examples of the positive electrode active material include, but are not limited to: layered compounds, such as lithium cobalt composite oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as LiVsOs, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; disulfide compounds; $Fe_2(MoO_4)_3$; or the like.

Non-limiting examples of the negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, may be used.

Non-limiting examples of the positive electrode current collector include foil made of aluminum, nickel or a combination thereof. Non-limiting examples of the negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between the active material and the conductive material and binding to the current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluororubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the process for applying the separator for an electrochemical device to the battery may include lamination (stacking) and folding of the separator with electrodes, besides a conventional process, winding.

According to an embodiment of the present disclosure, the separator for an electrochemical device may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a jelly-roll type, a stacked-folded type, a laminated-stacked type, or the like.

## MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

First, 5 wt% of poly(vinyl alcohol) (Sigma-Aldrich) and 95 wt% of water were introduced to a first water tank, and poly(vinyl alcohol) was dissolved therein. Polyethylene (JGP) having a thickness of 11 $\mu$m was prepared as a porous polymer substrate, and was dipped in the first water tank so that polyethylene might be coated with poly(vinyl alcohol), and drying was carried out at 80°C.

Next, 5 wt% of borax and 95 wt% of water were introduced to a second water tank to prepare an aqueous borax solution. The polyethylene coated with poly(vinyl alcohol) was dipped in the second water tank, and drying was carried out at 80°C.

In this manner, a separator for an electrochemical device including a binder polymer having a crosslinked structure formed through the reaction of poly(vinyl alcohol) with borax was obtained.

The polymer layer in the separator for an electrochemical device was formed on both surfaces of polyethylene as a porous polymer substrate to a thickness of 1.5 $\mu$m on one surface, and thus the finished separator had a total thickness of 14 $\mu$m.

### Comparative Example 1

Polyethylene (JGP) having a thickness of 11 $\mu$m was used as a separator for an electrochemical device with no further treatment.

**Comparative Example 2**

First, 5 parts by weight of particle-type butyl acrylate (Zeon) as a binder polymer was dissolved in water as a solvent to prepare a binder polymer solution, and 95 parts by weight of $Al_2O_3$ (average particle diameter: 500 nm) was added thereto. Then, the inorganic particles were pulverized and dispersed by using a ball mill for total 12 hours to prepare a slurry for forming an organic/inorganic composite porous layer.
The slurry for forming an organic/inorganic composite porous layer was coated on both surfaces of polyethylene (JGP) having a thickness of 11 $\mu$m, followed by drying, to obtain a separator for an electrochemical device.

**Test Example: Determination of Rate of Decrease in Thickness of Separator**

The separator according to each of Example 1 and Comparative Examples 1 and 2 was determined in terms of rate of decrease in thickness. The results are shown in the following Table 1.
The rate of decrease in thickness of each separator was determined, after compressing the separator by using a hot press (Qmesys) under the condition of 70°C and 7.8 MPa for 10 seconds. Herein, a PET film was interposed between the separator and the hot press in order to apply pressure uniformly.
The rate of decrease in thickness of the separator was calculated according to the following formula:

Rate of decrease in thickness of separator = (Initial thickness of separator – Thickness of separator after compression) / (Initial thickness of separator)

[Table 1]

| | Rate of decrease in thickness of separator (%) |
|---|---|
| Example 1 | 3.2 |
| Comp. Ex. 1 | 4.1 |
| Comp. Ex. 2 | 8.4 |

As can be seen from Table 1, the separator according to Example 1 has higher compression resistance as compared to the separators according to Comparative Examples 1 and 2.

## Claims

**1.** A separator for an electrochemical device, comprising:

a porous polymer substrate; and
a polymer layer disposed on at least one surface of the porous polymer substrate and comprising a binder polymer having a crosslinked structure,
wherein the binder polymer having a crosslinked structure comprises a structure represented by the following Chemical Formula 1:

[Chemical Formula 1]

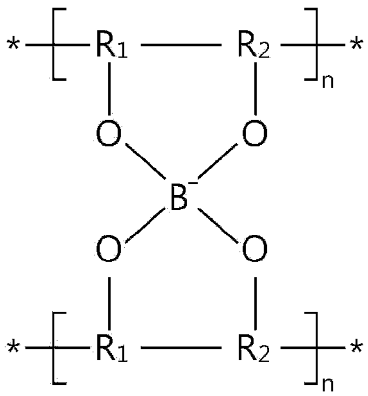

wherein each of $R_1$ and $R_2$ independently represents any one selected from a substituted or non-substituted C1-C10 alkylene group, a substituted or non-substituted C3-C10 cycloalkylene group and a substituted or non-substituted C6-C20 arylene group, and
n is 1-200.

2. The separator for an electrochemical device according to claim 1, wherein the binder polymer having a crosslinked structure comprises a crosslinked product of a boron-containing compound with a hydroxyl group-containing binder polymer.

3. The separator for an electrochemical device according to claim 2, wherein the boron-containing compound comprises borax, boric acid, lithium borate, potassium borate, or two or more of them.

4. The separator for an electrochemical device according to claim 2, wherein the hydroxyl group-containing binder polymer comprises poly(vinyl alcohol), poly(ethylene glycol), or two or more of them.

5. The separator for an electrochemical device according to claim 2, wherein the weight ratio of the boron-containing compound to the hydroxyl group-containing binder polymer is 30:70-70:30.

6. The separator for an electrochemical device according to claim 1, wherein the binder polymer having a crosslinked structure comprises a structure represented by the following Chemical Formula 2:

[Chemical Formula 2]

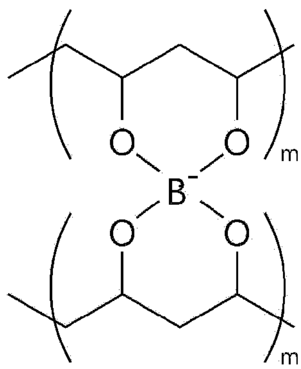

wherein m is 1-200.

7. The separator for an electrochemical device according to claim 1, which shows a rate of decrease in thickness of 4% or less.

8. An electrochemical device comprising a positive electrode, a negative electrode and a separator interposed between the positive electrode and the negative electrode, wherein the separator is the separator for an electrochemical device as defined in any one of claims 1 to 7.

**INTERNATIONAL SEARCH REPORT**

International application No. **PCT/KR2022/014448**

**A. CLASSIFICATION OF SUBJECT MATTER**

**H01M 50/449**(2021.01)i; **H01M 50/414**(2021.01)i; **H01G 11/52**(2013.01)i

According to International Patent Classification (IPC) or to both national classification and IPC

**B. FIELDS SEARCHED**

Minimum documentation searched (classification system followed by classification symbols)

H01M 50/449(2021.01); H01M 10/04(2006.01); H01M 10/052(2010.01); H01M 2/14(2006.01); H01M 2/16(2006.01); H01M 4/131(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 세퍼레이터(separator), 고분자층(polymer layer), 다공성 고분자 기재(porous polymer substrate), 가교(crosslink), 붕소 함유 화합물(boron-containing compound), 히드록시기 함유 바인더 고분자(hydroxy group-containing binder polymer)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0034174 A (SUMITOMO CHEMICAL CO., LTD.) 02 April 2015 (2015-04-02)<br>See claims 1, 10 and 11; and paragraphs [0032], [0034], [0035] and [0106]. | 1-8 |
| Y | CHEN, J. et al. Preparation and characterization of graphene oxide reinforced PVA film with boric acid as crosslinker. Journal of applied polymer science. 2015, vol. 132, no. 22, document no. 42000 (inner pp. 1-8).<br>See inner page 3, Crosslink Reaction of PVA with Borate Ion section; and figure 4. | 1-8 |
| Y | KR 10-2015-0032555 A (SUMITOMO CHEMICAL CO., LTD.) 26 March 2015 (2015-03-26)<br>See claims 1, 2, 5 and 8; and paragraphs [0076]-[0078], [0087] and [0095]. | 1-8 |
| Y | DINH, P. V. et al. Immobilized bacteria by using PVA (Polyvinyl alcohol) crosslinked with sodium sulfate. International Journal of Science and Engineering. 2014, vol. 7, no. 1, pp. 41-47.<br>See figure 4. | 1-8 |
| A | KR 10-2254067 B1 (NOROO PAINT & COATINGS CO., LTD. et al.) 21 May 2021 (2021-05-21)<br>See entire document. | 1-8 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 January 2023** | **10 January 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/014448**

| Patent document cited in search report | Publication date (day/month/year) | Patent family member(s) | Publication date (day/month/year) |
|---|---|---|---|
| KR 10-2015-0034174 A | 02 April 2015 | CN 104380498 A | 25 February 2015 |
| | | CN 104380498 B | 02 August 2019 |
| | | JP 2014-002953 A | 09 January 2014 |
| | | JP 6022227 B2 | 09 November 2016 |
| | | US 10177361 B2 | 08 January 2019 |
| | | US 2015-0140439 A1 | 21 May 2015 |
| | | WO 2013-191290 A1 | 27 December 2013 |
| KR 10-2015-0032555 A | 26 March 2015 | CN 104364939 A | 18 February 2015 |
| | | JP 2014-002954 A | 09 January 2014 |
| | | JP 6324655 B2 | 16 May 2018 |
| | | US 2015-0155541 A1 | 04 June 2015 |
| | | WO 2013-191291 A1 | 27 December 2013 |
| KR 10-2254067 B1 | 21 May 2021 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020210127572